(19) Europäisches Patentamt
European Patent Office
Office européen des brevets

(11) EP 4 361 102 A1

(12) **EUROPEAN PATENT APPLICATION**

(43) Date of publication:
01.05.2024 Bulletin 2024/18

(21) Application number: 23171147.4

(22) Date of filing: 02.05.2023

(51) International Patent Classification (IPC):
*C01G 45/02* (2006.01)    *C01G 53/00* (2006.01)
*H01M 4/00* (2006.01)

(52) Cooperative Patent Classification (CPC):
**C01G 45/02; C01G 53/50; H01M 4/00;**
C01P 2004/84; C01P 2006/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 24.10.2022 KR 20220137483

(71) Applicant: ECOPRO BM CO., LTD.
Cheongju-si, Chungcheongbuk-do 28116 (KR)

(72) Inventors:
• LIM, Ra Na
28116 Cheongju-si, Chungcheongbuk-do (KR)
• JUNG, Hyun Su
28116 Cheongju-si, Chungcheongbuk-do (KR)
• LIM, Kyung Min
28116 Cheongju-si, Chungcheongbuk-do (KR)
• KIM, Hye Bin
28116 Cheongju-si, Chungcheongbuk-do (KR)

(74) Representative: Vossius & Partner
Patentanwälte Rechtsanwälte mbB
Siebertstraße 3
81675 München (DE)

(54) **POSITIVE ELECTRODE ACTIVE MATERIAL AND LITHIUM SECONDARY BATTERY COMPRISING THE SAME**

(57) The present invention relates to a positive electrode active material and a lithium secondary battery including the same, and more particularly, to a positive electrode active material including an overlithiated lithium manganese-based oxide, and capable of preventing the degradation in electrochemical properties of a lithium secondary battery, including rate characteristics, caused by an excess of lithium and manganese in the lithium manganese-based oxide, and particularly reducing side reactions between the lithium manganese-based oxide and a liquid electrolyte during high-voltage operation, and a lithium secondary battery including the same.

**Description**

BACKGROUND

**1. Field of the Invention**

The present invention relates to a positive electrode active material and a lithium secondary battery including the same, and more particularly, to a positive electrode active material including an overlithiated lithium manganese-based oxide, and capable of preventing the degradation in electrochemical properties of a lithium secondary battery, including rate characteristics, caused by an excess of lithium and manganese in the lithium manganese-based oxide, and particularly reducing side reactions between the lithium manganese-based oxide and a liquid electrolyte during high-voltage operation, and a lithium secondary battery including the same.

**2. Discussion of Related Art**

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials, and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be $LiCoO_2$, $LiMn_2O_4$, $LiNiO_2$, $LiMnO_2$, or an oxide in which Ni, Co, Mn or Al is complexed.

Among the positive electrode active materials, $LiCoO_2$ is most widely used due to excellent lifetime characteristics and charge/discharge efficiency, but it is expensive due to cobalt being a limited resource, which is used as a raw material, and thus has a disadvantage of limited price competitiveness.

Lithium manganese oxides such as $LiMnO_2$ and $LiMn_2O_4$ have advantages of excellent thermal safety and low costs, but also have problems of small capacity and poor high-temperature characteristics. In addition, while a $LiNiO_2$-based positive electrode active material exhibits a battery characteristic such as a high discharge capacity, due to cation mixing between Li and a transition metal, it is difficult to synthesize the $LiNiO_2$-based positive electrode active material, thereby causing a big problem in rate characteristics.

In addition, depending on the intensification of such a cation mixing, a large amount of Li by-products is generated. Since most of the Li by-products include LiOH and $Li_2CO_3$, they may cause gelation in preparation of a positive electrode paste, or cause gas generation according to repeated charging/discharging after the manufacture of an electrode. In addition, residual $Li_2CO_3$ in the Li by-product increases cell swelling to act as the cause of degrading a lifetime characteristic.

Various candidate materials for compensating for these shortcomings of conventional positive electrode active materials are being suggested.

In one example, there is on-going research to use an overlithiated lithium manganese-based oxide in which an excess of Mn among transition metals is included and a lithium content is higher than the sum of the contents of the transition metals as a positive electrode active material for a lithium secondary battery. Such an overlithiated lithium manganese-based oxide is also referred to as an overlithiated layered oxide (OLO).

Although the OLO has an advantage in that it can theoretically exhibit high capacity under a high voltage operation environment, in fact, due to an excessive amount of Mn contained in the oxide, the electrical conductivity is relatively low, and thus the rate capability of a lithium secondary battery using OLO is low. As such, when the rate capability is low, there is a problem in which charge/discharge capacity and lifespan efficiency (cycling capacity retention) are degraded during the cycling of a lithium secondary battery.

In addition, during the cycling of a lithium secondary battery using OLO, a decrease in charge/discharge capacity or voltage decay may be caused by a phase transition caused by the migration of a transition metal in the lithium manganese-based oxide. For example, when a transition metal in a lithium manganese-based oxide having a layered crystal structure migrates in an unintended direction to induce phase transition, spinel or a crystal structure similar thereto may be generated entirely and/or partially in the lithium manganese-based oxide.

To solve the above-described problems, although research of changing the composition of OLO has been conducted, such an attempt has not yet reached a commercialization level.

## SUMMARY OF THE INVENTION

In the lithium secondary battery market, the growth of lithium secondary batteries for electric vehicles is driving the market, and accordingly, the demand for positive electrode active materials used in lithium secondary batteries is also continuously increasing.

For example, conventionally, to ensure stability, lithium secondary batteries using LFP have mainly been used, but recently, the use of a nickel-based lithium composite oxide having a larger energy capacity per weight than LFP tends to be increasing.

In addition, recently, nickel-based lithium composite oxides mainly used as positive electrode active materials for high-capacity lithium secondary batteries essentially use three-component metal elements such as nickel, cobalt and manganese or nickel, cobalt and aluminum. However, since cobalt is not only unstable in supply, but also excessively expensive compared to other raw materials, a positive electrode active material with a new composition, which can reduce a cobalt content or exclude cobalt is needed.

Considering these circumstances, an overlithiated lithium manganese-based oxide can meet the above-mentioned expectations of the market, but there a limitation that the lithium manganese-based oxide still lacks electrochemical properties or stability to replace a commercialized positive electrode active material such as a ternary-based lithium composite oxide of the composition of nickel-cobalt-manganese (NCM) or nickel-cobalt-aluminum (NCA).

For example, when a spinel or a similar crystalline structure thereto is entirely and/or partially formed in a lithium manganese-based oxide as a transition metal in the lithium manganese-based oxide migrates in an unintended direction, it has been described above that a decrease in charge/discharge capacity or a voltage decay may occur during cycling of a lithium secondary battery using OLO.

However, compared with other types of commercialized positive electrode active materials, even when a conventional overlithiated lithium manganese-based oxide has disadvantages in terms of electrochemical properties and/or stability, by modifying the surface of the lithium manganese-based oxide, it was confirmed by the present inventors that the overlithiated lithium manganese-based oxide may also exhibit commercially available level electrochemical properties and stability.

The present inventors confirmed that not only reducing side reactions between the lithium manganese-based oxide and a liquid electrolyte by forming a physical barrier between the lithium manganese-based oxide and the liquid electrolyte through the surface modification of the lithium manganese-based oxide, but also when a spinel phase and/or spinel-like phase (hereinafter, unless defined otherwise, the spinel phase refers to both a spinel phase and a spinel-like phase) is (are) formed on at least a part of the surface of the lithium manganese-based oxide through the surface modification, unlike a spinel phase formed by a phase transition according to the migration of transition metals in the lithium manganese-based oxide, the spinel phase formed by the surface modification may serve as a 2D and/or 3D path through which lithium ions in the lithium manganese-based oxide diffuse.

In addition, when the above-described surface modification is applied after reducing a specific surface area by the induction of the crystal growth or particle growth of primary particles constituting the lithium manganese-based oxide, the surface modification effect intended by the present invention (e.g., the improvement in diffusivity of lithium ions) may be further improved.

Therefore, the present invention is directed to providing a positive electrode active material that includes an overlithiated lithium manganese-based oxide, and is capable of reducing side reactions between the lithium manganese-based oxide and a liquid electrolyte by modifying the surface of the lithium manganese-based oxide.

In addition, the present invention is directed to providing a positive electrode active material that is capable of mitigating and/or preventing the degradation in charge transfer and/or diffusivity (i.e., surface kinetics) of lithium ions on a particle surface by modifying the surface of the lithium manganese-based oxide.

In addition, the present invention is directed to providing a positive electrode active material that is capable of mitigating and/or preventing the degradation in rate characteristics caused by an excess of lithium and manganese in the lithium manganese-based oxide and reducing side reactions between the lithium manganese-based oxide and a liquid electrolyte during high-voltage operation by inducing the crystal growth or particle growth of primary particles constituting the lithium manganese-based oxide and at the same time modifying the surface of the primary particle, that is, the surface of the primary particle forming the surface of a secondary particle formed by aggregating a plurality of primary particles.

Moreover, the present invention is directed to providing a lithium secondary battery that uses a positive electrode including the positive electrode active material defined in the present invention to realize high stability by mitigating and/or preventing the degradation in rate characteristics caused by an excess of lithium and manganese in convention OLO and reducing side reactions between the positive electrode active material and a liquid electrolyte during high-voltage operation.

To solve the above technical problems, one aspect of the present invention provides a positive electrode active material that includes a lithium manganese-based oxide in which a phase belonging to a C2/m space group and a phase belonging to an R3-m space group are dissolved or complexed.

Generally, in a commercialized ternary lithium composite oxide with a nickel-cobalt-manganese (NCM) or nickel-cobalt-aluminum (NCA) composition, the phase belonging to the R3-m space group is present as a single phase, but in the overlithiated lithium manganese-based oxide defined herein, a phase belonging to a C2/m space group and a phase belonging to an R3-m space group are dissolved or complexed.

In one embodiment, the positive electrode active material may include a lithium manganese-based oxide present as a secondary particle in which a plurality of primary particles are aggregated.

Here, for a primary particle constituting the lithium manganese-based oxide, crystal growth or particle growth is preferably induced. Accordingly, the average value of the minor axis lengths of the primary particles may be 130 nm or more and less than 850 nm, preferably, 300 nm or more and 500 nm or less, and more preferably, 289 nm or more and 353 nm or less.

The average value of the minor axis lengths of the primary particles may be measured for the primary particles exposed on the surface of the secondary particle from an SEM image of the secondary particle (e.g., calculated from 20 primary particles selected in the order from longest-to-shortest minor axis lengths from the primary particles exposed on the surface of the secondary particle from the SME image of the secondary particle).

The lithium manganese-based oxide may be an overlithiated lithium manganese-based oxide represented by Formula 1 below.

$$[Formula\ 1] \qquad Li(Li_aM1_xM2_y)O_{2-b}X_b$$

Wherein,

M1 is at least one selected from Ni and Mn,
M2 is at least one selected from Ni, Mn, Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, and M2 does not overlap with M 1,
X is a halogen that can substitute for at least some of the oxygen present in the lithium manganese-based oxide,
$0<a\leq0.7$, $0\leq b\leq0.1$, $0<x\leq1$, $0\leq y<1$, and $0<x+y\leq1$.

In one embodiment, at least a part of the surfaces of the primary and secondary particles may be modified. Specifically, a coating layer that includes at least one selected from a first oxide including at least one selected from metal elements and metalloid elements and a second oxide including phosphorus (P) may be present on at least a part of the surfaces of the primary and secondary particles.

As the surface of the primary particle, and particularly, the surface of the primary particle forming the surface of the secondary particle is modified with the first and second oxides, side reactions with a liquid electrolyte, occurring on the surface of the secondary particle, may be reduced, and at the same time, the degradation in charge transfer and/or diffusivity (that is, surface kinetics) of lithium ions on the surface of the secondary particle may be mitigated and/or prevented.

In addition, a spinel phase may be formed through the surface modification of the primary and/or secondary particles.

Unlike a spinel phase formed by a phase transition according to the migration of transition metals in the lithium manganese-based oxide, the spinel phase formed on the surface(s) of the primary and/or secondary particles may serve as a 2D and/or 3D path through which lithium ions in the lithium manganese-based oxide diffuse.

In addition, another aspect of the present invention provides a positive electrode including the above-described positive electrode active material.

Moreover, still another aspect of the present invention provides a lithium secondary battery using the above-described positive electrode.

BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:

FIGS. 1 and 2 are SEM images of lithium manganese-based oxides included in positive electrode active materials according to Examples 1 and 2, respectively;
FIG. 3 is an SEM image of a lithium manganese-based oxide included in a positive electrode active material according to Comparative Example 1;
FIGS. 4 to 6 are SEM images of lithium manganese-based oxides included in positive electrode active materials according to Reference Examples 1 to 3, respectively;

FIGS. 7 to 9 show dQ/dV profiles during initial discharging of lithium secondary batteries manufactured using the positive electrode active materials according to Examples 1 to 3, respectively;

FIG. 10 shows a dQ/dV profile during initial discharging of a lithium secondary battery manufactured using the positive electrode active material according to Comparative Example 1;

FIGS. 11 and 12 show dQ/dV profiles during initial discharging of lithium secondary batteries manufactured using the positive electrode active materials according to Reference Examples 3 and 4, respectively;

FIG. 13 shows the EDS mapping result of target elements (Ni, Mn, Al and P) for the cross-sectional SEM image of the lithium manganese-based oxide included in the positive electrode active material according to Example 1; and

FIG. 14 shows the EDS mapping result of target elements (Ni, Mn, Al and P) for the cross-sectional SEM image of the lithium manganese-based oxide included in the positive electrode active material according to Example 2.

## DETAILED DESCRIPTION OF EXEMPLARY EMBODIMENTS

In order to better understand the present invention, certain terms are defined herein for convenience. Unless defined otherwise herein, scientific and technical terms used herein will have meanings commonly understood by those of ordinary skill in the art. In addition, unless specifically indicated otherwise, terms in a singular form also include plural forms, and terms in a plural form should be understood to include singular forms as well.

Hereinafter, a positive electrode active material including an overlithiated lithium manganese-based oxide and a lithium secondary battery including the positive electrode active material according to some embodiments of the present invention will be described in further detail.

Positive electrode active material

According to one aspect of the present invention, a positive electrode active material that includes a lithium manganese-based oxide in which a phase belonging to a C2/m space group and a phase belonging to an R3-m space group are dissolved or complexed is provided.

The lithium manganese-based oxide includes at least lithium, nickel, and manganese. Here, when the content of lithium in the lithium manganese-based oxide is larger than the sum of the contents of other transition metals (generally, when a molar ratio of lithium to total metal elements except lithium (Li/Metal molar ratio) in the lithium manganese-based oxide is greater than 1), the lithium manganese-based oxide is also referred to as an overlithiated layered oxide (OLO).

Generally, considering that the content of manganese among all metal elements except lithium is 20 mol% or less in a commercially available ternary lithium composite oxide with a nickel-cobalt-manganese (NCM) or nickel-cobalt-aluminum (NCA) composition, the lithium manganese-based oxide has a relatively high proportion of manganese (e.g, 50 mol% or more, and preferably, 55 to 75 mol%) among all metal elements relative to the commercialized ternary lithium composite oxide.

In addition, considering that the content of nickel among all metal elements except lithium is 60 mol% or more (in the case of a high-Ni type, 80 mol% or more) in a commercialized ternary lithium composite oxide with a nickel-cobalt-manganese (NCM) or nickel-cobalt-aluminum (NCA) composition, the lithium manganese-based oxide has a relatively low proportion of nickel (e.g., less than 50 mol%, and preferably, 25 to 45 mol%) among all metal elements relative to the commercialized ternary lithium composite oxide.

The Li/Metal molar ratio measured from the lithium manganese-based oxide defined in the present invention is higher than that of the ternary lithium composite oxide such as nickel-cobalt-manganese (NCM) or nickel-cobalt-aluminum (NCA). For example, the Li/Metal molar ratio of the ternary lithium composite oxide such as nickel-cobalt-manganese (NCM) or nickel-cobalt-aluminum (NCA) has a value almost close to 1. On the other hand, the Li/Metal molar ratio of the lithium manganese-based oxide defined by the present invention may be higher than 1, preferably, 1.1 to 1.7, and more preferably, 1.2 to 1.6.

Despite the above-described difference in composition, the lithium manganese-based oxide may also serve as a composite metal oxide enabling the intercalation/deintercalation of lithium ions.

The lithium manganese-based oxide included in the positive electrode active material defined by the present invention includes a secondary particle formed by aggregating a plurality of primary particles.

A primary particle constituting the lithium manganese-based oxide may have a rod shape, an oval shape and/or an irregular shape. In addition, in a preparation process, unless particularly intended, primary particles with various shapes are present in the same positive electrode active material.

The conventional overlithiated lithium manganese-based oxide has a form of a secondary particle in which a plurality of primary particles are aggregated, for example, an aggregated form of primary particles generally having an average particle diameter of several to tens of nanometers.

On the other hand, the primary particles constituting the lithium manganese-based oxide defined by the present invention may have an average particle diameter of 0.1 to 5 $\mu$m, preferably, 0.1 to 1.0 $\mu$m, and more preferably, 0.25 to 0.75 $\mu$m as crystal growth or particle growth is induced.

The major axis length of the primary particle, the minor axis length of the primary particle, a ratio of the major axis length and the minor axis length of the primary particle (the major axis length/the minor axis length), and the average particle diameter of the primary particle ([the major axis length+the minor axis length]/2) may be calculated as an average value of the major axis lengths and the minor axis lengths of primary particles exposed on the surface of a secondary particle, which have been measured in advance.

For example, for the calculation, the average value of the results measured from all primary particles exposed on the surface of the secondary particle or the average value of the results measured from a plurality of primary particles selected from the primary particles exposed on the surface of the secondary particle (e.g., or calculated from a plurality (e.g., 10 or 20 primary particles) of primary particles selected in the order from longest-to-shortest minor axis lengths from the primary particles exposed on the surface of the secondary particle from the SEM image of the secondary particle) may be used.

When the average particle diameter of the primary particles is smaller than 0.1 $\mu$m, the specific surface area of the lithium manganese-based oxide (secondary particle) composed of the primary particles is relatively large. In this case, during the storage or operation of the lithium secondary battery, the possibility of causing side reactions between the lithium manganese-based oxide and a liquid electrolyte may increase.

On the other hand, when the average particle diameter of the primary particles is larger than 5 $\mu$m, as the growth of the primary particles is excessively induced, the diffusion path of lithium ions in the primary particles also becomes longer. When the diffusion path of lithium ions in the primary particles is excessively long, the migration of lithium ions in the primary particles and the diffusivity of lithium ions mediated by the primary particles are degraded, which is a cause of increasing the resistance of the lithium manganese-based oxide (secondary particle) composed of the primary particles.

Accordingly, to reduce the specific surface area of the lithium manganese-based oxide, and at the same time, prevent the degradation in migration of lithium ions in the primary particles and diffusivity of lithium ions mediated by the primary particles, the average particle diameter of the primary particles is preferably 0.1 to 5 $\mu$m, preferably 0.1 to 1.0 $\mu$m, and more preferably 0.25 to 0.75 $\mu$m.

Here, the average value of the minor axis lengths of the primary particles constituting the lithium manganese-based oxide may be 130 nm or more and less than 850 nm, preferably, 300 nm or more and 500 nm or less, and more preferably, 289 nm or more and 353 nm or less.

As described above, as the average value of the minor axis lengths of the primary particles, the average value of the results measured from all primary particles exposed on the surface of the secondary particle or a plurality (e.g., 10 or 20 primary particles) of primary particles selected in the order from longest-to-shortest minor axis lengths from the primary particles exposed on the surface of the secondary particle may be used.

That the average value of the minor axis lengths of the primary particles is smaller than 130 nm means that the crystal growth or particle growth of the primary particles constituting the secondary particle is generally insufficient. When the average value of the minor axis lengths of the primary particles is smaller than 130 nm, lithium-ion diffusivity may be physically high, but as the specific surface area of the lithium manganese-based oxide increases, battery performance may be rapidly reduced by side reactions during an initial battery reaction under a high voltage condition. In addition, the growth of the primary particles is not only insufficient, but also it may be difficult to uniformly modify the surface of the primary and/or secondary particles as the specific surface area of the lithium manganese-based oxide increases.

On the other hand, that the average value of the minor axis lengths of the primary particles is 850 nm or more means that the primary particles are excessively grown. Generally, when over-calcination in the process of preparing the lithium manganese-based oxide, the growth of the primary particles may be unnecessarily promoted. Particularly, when the diffusion path of lithium ions in the primary particles extends due to the excessive growth of the primary particles through over-calcination, the diffusivity of lithium ions mediated by the primary particle is degraded, which becomes a cause of increasing the resistance of the lithium manganese-based oxide. As the resistance of the lithium manganese-based oxide increases, battery reactivity may be lowered, making it difficult to improve battery capacity and rate characteristics.

When the lithium manganese-based oxide is present as a secondary particle in which a plurality of primary particles are aggregated, the average particle diameter ([the major axis length+the minor axis length]/2) of the secondary particle may be 0.5 to 15 $\mu$m. The average particle diameter of the secondary particle may vary according to the number of primary particles constituting the secondary particle. In addition, as the average particle diameter of the primary particles is increased by inducing the crystal growth or particle growth of the primary particles, the number of primary particles constituting the secondary particle may be reduced.

The lithium manganese-based oxide defined by the present invention may be an overlithiated lithium manganese-based oxide represented by Formula 1 below. The composition represented by Formula 1 below may indicate an average composition reflecting the composition of the coating layer present on at least a part of the surface of the lithium manganese-based oxide.

[Formula 1] $Li(Li_aM1_xM2_y)O_{2-b}X_b$

Wherein, M1 is at least one selected from Ni and Mn,

M2 is at least one selected from Ni, Mn, Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, and M2 does not overlap with M1,
X is a halogen that can substitute for at least some of the oxygen present in the lithium manganese-based oxide, $0<a\leq0.7$, $0\leq b\leq0.1$, $0<x\leq1$, $0\leq y<1$, and $0<x+y\leq1$.

For the type of halogen that can be used as X, refer to the periodic table, and F, Cl, Br and/or I may be used, and preferably, F may be used.

A gradient in which the proportion of at least one selected from x and y in Formula 1, and preferably, y, changes may be formed from the surface portion to the central portion of the primary particle. In addition, a gradient in which at least one selected from x and y in Formula 1, and preferably, the proportion of y, changes may be formed from the surface portion to the central portion of the secondary particle.

In addition, the overlithiated lithium manganese-based oxide represented by Formula 1 may further include a spinel phase other than a phase belonging to a C2/m space group and a phase belonging to an R3-m space group.

In another embodiment, the lithium manganese-based oxide may be represented by Formula 1-1 below. The composition represented by Formula 1-1 below may be an average composition reflecting the composition of a coating layer present on at least a part of the surface of the lithium manganese-based oxide.

[Formula 1-1] $r'Li_2MnO_3 - (1-r')Li_{a'}M1_{x'}M2_{y'}O_{2-b'}X_{b'}$

Wherein

M1 is at least one selected from Ni and Mn,
M2 is at least one selected from Ni, Mn, Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, and M2 does not overlap with M1,
X is a halogen that can substitute for at least some of the oxygen present in the lithium manganese-based oxide, $0<r\leq0.7$, $0<a'\leq1$, $0\leq b'\leq0.1$, $0<x'\leq1$, $0\leq y'<1$, and $0<x'+y'\leq1$.

For the type of halogen that can be used as X, refer to the periodic table, and F, Cl, Br and/or I may be used, and preferably, F may be used.

In Formula 1 and Formula 1-1, when M1 is Ni, M2 may include Mn, and when M1 is Mn, M2 may include Ni. In addition, when M1 is Ni and Mn, M2 may not be present, or when present, M2 may be an element other than Ni and Mn.

That is, when M1 is Ni, M2 may include at least one selected from Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd (preferably, at least one selected from Co, Al, P, Nb, B, Ti, Zr, Ba, K, Mo, Si and W, more preferably, at least one selected from Co, Al, P, B, Ti, Zr, Si and W, and even more preferably, Al and P) and Mn.

When M1 is Mn, M2 may include at least one selected from Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd (preferably, at least one selected from Co, Al, P, Nb, B, Ti, Zr, Ba, K, Mo, Si and W, more preferably, at least one selected from Co, Al, P, B, Ti, Zr, Si and W, and even more preferably Al and P) and Ni.

When M1 is Ni and Mn, M2 may include at least one selected from Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, preferably, at least one selected from Co, Al, P, Nb, B, Ti, Zr, Ba, K, Mo, Si and W, more preferably, at least one selected from Co, Al, P, B, Ti, Zr, Si and W, and even more preferably, Al and P.

The lithium manganese-based oxide represented by Formula 1 or Formula 1-1 may optionally include cobalt. When the lithium manganese-based oxide includes cobalt, the mole fraction of the cobalt relative to the number of moles of all metal elements in the lithium manganese-based oxide may be 20% or less, preferably, 15% or less, and more preferably, 10% or less. In another case, the lithium manganese-based oxide represented by Formula 1 may have a cobalt-free composition.

A Li/Metal molar ratio measured from the lithium manganese-based oxide represented by Formula 1 or Formula 1-1 may be greater than 1, preferably, 1.1 to 1.7, and more preferably, 1.2 to 1.6. It is possible to form an overlithiated lithium manganese-based oxide when the Li/Metal molar ratio measured from the lithium manganese-based oxide has a value greater than at least 1. In addition, in order for the lithium manganese-based oxide to properly form a solid solution in which a phase belonging to a C2/m space group and a phase belonging to an R3-m space group are dissolved or complexed, and at the same time, exhibit a high capacity under a high-voltage operating environment, the Li/Metal molar ratio of the lithium manganese-based oxide is preferably 1.2 to 1.6.

In addition, to property form a solid solution in which a phase belonging to a C2/m space group and a phase belonging to an R3-m space group are dissolved or complexed, the content of manganese in the total metal elements except lithium in the lithium manganese-based oxide represented by Formula 1 or Formula 1-1 is preferably 50 mol% or more. In order for the lithium manganese-based oxide to have the characteristics of OLO exhibiting a high capacity under a high-voltage operating environment, the content of manganese among all metal elements except lithium, present in the lithium manganese-based oxide, is more preferably, 50 mol% or more and less than 80 mol%, and even more preferably, 55 to 75 mol%. When the content of manganese in the lithium manganese-based oxide is more than 80 mol%, a phase transition may occur due to the migration of a transition metal (particularly, manganese) in the lithium manganese-based oxide during formation and/or operation of a lithium secondary battery. Such a phase transition forms a spinel phase, and the spinel phase acting as an impurity in the lithium manganese-based oxide may induce a decrease in charge/discharge capacities or voltage decay during the cycling of a lithium secondary battery.

To properly form a solid solution in which the phase belonging to the C2/m space group and the phase belonging to the R3-m space group are dissolved or complexed, the content of nickel among all metal elements except lithium in the lithium manganese-based oxide represented by Formula 1 or Formula 1-1 is preferably less than 50 mol%.

When the content of nickel in the lithium manganese-based oxide is 50 mol% or more, since it is difficult to sufficiently form the C2/m phase, or the phase belonging to the C2/m space group and the phase belonging to the R3-m space group do not sufficiently form a solid solution, phase separation may be caused during formation and/or operation of a lithium secondary battery.

Generally, in a commercialized ternary lithium composite oxide with a nickel-cobalt-manganese (NCM) or nickel-cobalt-aluminum (NCA) composition, the phase belonging to the R3-m space group is present in a single phase.

On the other hand, the overlithiated lithium manganese-based oxide represented by Formula 1 or Formula 1-1 is present as a composite oxide in which an oxide of the phase belonging to the C2/m space group (hereinafter, referred to as "C2/m phase") represented by $rLi_2MnO_3$ and an oxide of the phase belonging to the R3-m space group (hereinafter, referred to as "R3-m phase") represented by $(1-r)Li_aM1_xM2_yO_{2-b}X_b$ are dissolved or complexed. For example, the lithium manganese-based oxide may be present in a state in which the C2/m-phase oxide and the R3-m-phase oxide form a solid solution.

Here, a composite oxide in which the phase belonging to the C2/m space group and the phase belonging to the R3-m space group are simply physically and/or chemically bonded or attached does not correspond to the solid solution defined therein.

For example, a composite oxide having the phase belonging to the C2/m space group whose surface is coated with a metal oxide with the phase belonging to the R3-m space group by mixing a metal oxide having the phase belonging to the C2/m space group and the metal oxide with the phase belonging to the R3-m space group does not correspond to the solid solution defined herein.

In the lithium manganese-based oxide represented by Formula 1-1, when r is more than 0.7, the proportion of $Li_2MnO_3$, which is a C2/m phase oxide, in the lithium manganese-based oxide is excessively large, and therefore, the content of manganese in the positive electrode active material is excessively high, which may lower the discharge capacity. That is, to improve surface kinetics by sufficiently activating a C2/m-phase oxide with relatively high resistance in the lithium manganese-based oxide, the R3-m phase oxide is preferably present in a predetermined proportion or more.

In one embodiment, at least a part of the surfaces of the primary and secondary particles may be modified. Specifically, a coating layer including a first oxide including at least one selected from metal elements and metalloid elements and a second oxide including phosphorus (P) may be present on at least a part of the surfaces of the primary and secondary particles.

Unless defined otherwise, the term "surface of the primary particle" used herein refers to the outermost surface of the primary particle exposed to the outside. Likewise, the term "surface of the secondary particle" used herein refers to the outermost surface of the secondary particle exposed to the outside. Here, the "surface of the secondary particle" formed by aggregating a plurality of primary particles corresponds to the exposed surface of the primary particle present in the surface portion of the secondary particle.

In addition, unless defined otherwise, the term "surface portion of a particle" used herein refers to a region relatively close to the "surface" of a particle, the "central portion of a particle" refers to a region relatively close to the "very center" of a particle, compared to the "surface portion." Accordingly, the "surface portion of a primary particle" refers to the region relatively close to the "surface" of the primary particle, and the "central portion of a primary particle" refers to the region relatively close to the "very center" of the primary particle compared to the "surface portion." Likewise, the "surface portion of a secondary particle" refers to the region relatively close to the "surface" of the secondary particle, and the "central portion of a secondary particle" refers to the region relatively close to the "very center" of the secondary particle compared to the "surface portion."

Here, a region excluding the "surface portion of a particle" within any particle may be defined as the "central portion of a particle."

For example, when the radius of the primary particle is r, the region in which the distance from the surface of the primary particle is 0 to 0.5r may be defined as the surface portion of the primary particle, and the region in which the distance from the very center of the primary particle is 0 to 0.5r may be defined as the central portion of the primary particle. When the radius of the primary particle is 0.5 $\mu$m, the surface portion of the primary particle may be defined as the region in which the distance from the surface of the primary particle is 0 to 0.25 $\mu$m, and the central portion of the primary particle may be defined as the region in which the distance from the very center of the primary particle is 0 to 0.25 $\mu$m.

In addition, if necessary, when the radius of the primary particle is r, the region in which the distance from the surface of the primary particle is 0 to 0.1 r or 0 to 0.2r may be defined as the surface portion of the primary particle, and the region in which the distance from the very center of the primary particle is 0 to 0.2r or 0 to 0.5r may be defined as the central portion of the primary particle.

Likewise, when the radius of the secondary particle is r, the region in which the distance from the surface of the secondary particle is 0 to 0.5r may be defined as the surface portion of the secondary particle, and the region in which the distance from the very center of the secondary particle is 0 to 0.5r may be defined as the central portion of the secondary particle. When the radius of the secondary particle is 2.0 $\mu$m, the surface portion of the secondary particle may be defined as the region in which the distance from the surface of the secondary particle is 0 to 1.0 $\mu$m, and the central portion of the secondary particle may be defined as the region in which the distance from the very center of the primary particle is 0 to 1.0 $\mu$m.

In addition, if necessary, when the radius of the secondary particle is r, the region in which the distance from the surface of the secondary particle is 0 to 0.1r or 0 to 0.2r may be defined as the surface portion of the secondary particle, and the region in which the distance from the very center of the secondary particle is 0 to 0.2r or 0 to 0.5r may be defined as the central portion of the secondary particle.

The side reactions with a liquid electrolyte occurring on the surface of the secondary particle may be reduced and the degradation in charge transfer and/or diffusivity (i.e., surface kinetics) of lithium ions on the surface of the secondary particle may be mitigated and/or prevented by modifying the surface of the primary particle, particularly, the surface of the primary particle forming the surface of the secondary particle with the first and second oxides.

The surface where adjacent primary particles in the secondary particle come into contact with each other may be referred to as the interface between the primary particles, and the interface between the primary particles may be defined as the grain boundary between the primary particles. In addition, the primary particle may be spaced apart from an adjacent primary particle to form a void in the secondary particle.

The coating layer may be defined as a region in which the first and/or second oxide(s) is(are) present on the surface of the primary and/or secondary particles, and the coating layer may be entirely or partially formed on the surface of the primary and/or secondary particles. When the coating layer is partially formed on the surface of the primary and/or secondary particles, it may be formed in the form of an island.

In addition, the first and/or second oxide(s) may be present in a state of physically and/or chemically binding to the surface of the primary and/or secondary particles, or present in a partially dissolved state.

The coating layer present inside the secondary particle may be formed by diffusing the first and/or second oxide(s) from the surface portion to the central portion of the secondary particle along the grain boundary between the primary particles. As the first and/or second oxide(s) are diffused from the surface portion to the central portion of the secondary particle, at least one of the elements included in the first and/or second oxide(s) may exhibit a decreasing concentration gradient from the surface portion to the central portion of the secondary particle.

The first oxide may be represented by Formula 2 below.

$$[\text{Formula 2}] \qquad \text{Li}_c\text{M3}_d\text{O}_e$$

Wherein, M3 is at least one selected from Ni, Mn, Co, Al, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, $0 \leq c \leq 10$, $0 \leq d \leq 8$, $0 < e \leq 13$, and the case in which c and d are 0 at the same time is excluded.

Non-limiting examples of the first oxide represented by Formula 2 include $\text{Li}_g\text{Zr}_h\text{O}_i$, $\text{Li}_g\text{Ti}_h\text{O}_i$, $\text{Li}_g\text{Ni}_h\text{O}_i$, $\text{Li}_g\text{Nb}_h\text{O}_i$, $\text{Li}_g\text{Co}_h\text{O}_i$, $\text{Li}_g\text{Si}_h\text{O}_i$, $\text{Li}_g\text{Al}_h\text{O}_i$, $\text{Co}_h\text{O}_i$, $\text{Mn}_h\text{O}_i$, $\text{Al}_h\text{O}_i$, $\text{Si}_h\text{O}_i$, $\text{Zr}_h\text{O}_i$, and $\text{Ti}_h\text{O}_i$.

As the first oxide diffuses from the surface portion to the central portion of the secondary particle along the grain boundary between the primary particles, a gradient in which the M3 concentration decreases from the surface portion to the central portion of the secondary particle may be formed. The concentration gradient of M3 may be confirmed by SEM/EDS analysis of the lithium manganese-based oxide.

The second oxide may be represented by Formula 3 below.

[Formula 3]       $Li_f M4_g (P_h O_i)_j$

Wherein, M4 is at least one selected from Ni, Mn, Co, Al, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, $0 \leq f \leq 10$, $0 \leq g \leq 8$, $0 < h \leq 4$, $0 < i \leq 10$, and $0 < j \leq 13$.

Non-limiting examples of the second oxide represented by Formula 3 include $Li_j (P_l O_m)_n$, $Li_j Al_k (P_l O_m)_n$, $Al_k (P_l O_m)_n$, $(P_l O_m)_n$, $Li_j Mn_k (P_l O_m)_n$, $Mn_k (P_l O_m)_n$, $Li_j Ni_k (P_l O_m)_n$, and $Ni_k (P_l O_m)_n$.

Likewise, the second oxide may diffuse from the surface portion to the central portion of the secondary particle along the grain boundary between the primary particles, and accordingly, a gradient in which the concentration(s) of M4 and/or P decrease(s) from the surface portion to the central portion of the secondary particle may be formed. The concentration gradients of M4 and P may be confirmed by SEM/EDS analysis of the lithium manganese-based oxide.

The first oxide may be mainly present in the form of microparticles on the surface(s) of the primary and/or secondary particles. On the other hand, the second oxide may be present in a rod form not only on the surface of the primary and/or secondary particles, but also between the primary particles.

When the coating layer includes both the first and second oxides, the mole fractions of M3, M4 and phosphorus (P) calculated by Expression 1 below from the ICP analysis result for the positive electrode active material are preferably 1.0 to 30.0, and more preferably 1.13 to 26.25.

$$[\text{Expression 1}]$$

$$P \; (\text{mol\%}) / (M3 \; (\text{mol\%}) + M4 \; (\text{mol\%}))$$

That the mole fractions of M3, M4 and phosphorus (P) calculated by Expression 1 is lower than 1.0 means that the M3 and M4 contents are excessively large, or the phosphorus (P) content is insufficient. When the contents of M3 and M4 in the lithium manganese-based oxide are excessively large, a problem of reducing the discharge capacity of a positive electrode active material using the lithium manganese-based oxide may occur. On the other hand, when the content of phosphorus (P) in the lithium manganese-based oxide is excessively low, an effect of inhibiting side reactions with a liquid electrolyte on the surface(s) of primary and/or secondary particles may be insufficient, or it may be difficult to actively form a 2D and/or 3D path through which lithium ions diffuse into the lithium manganese-based oxide. It may also be difficult to form a spinel phase on the surface of the lithium manganese-based oxide.

That the mole fractions of M3, M4 and phosphorus (P) calculated by Expression 1 is higher than 30.0 means that the M3 and M4 contents are insufficient, or the phosphorus (P) content is excessively large. When the phosphorus (P) content in the lithium manganese-based oxide is excessively large, the specific surface area of the lithium manganese-based oxide is excessively large, so surface stability may rapidly deteriorate, such as an increase in side reactions with a liquid electrolyte. On the other hand, when the contents of M3 and M4 in the lithium manganese-based oxide is excessively small, it may be difficult to sufficiently alleviate the decrease in surface kinetics of primary and/or secondary particles.

In addition, when the coating layer includes both the first and second oxides, as the first and/or second oxide(s) diffuse(s) from the surface portion to the central portion of the secondary particle along the grain boundary between the primary particles, a gradient in which the concentration of at least one selected from M3, M4 and P decreases from the surface portion to the central portion of the secondary particle may be formed.

Such a concentration gradient serves as a path for lithium ions to move in the primary particle and between the primary particles, and accordingly, the transport/diffusion efficiency of lithium ions mediated by the primary particle may be improved.

Meanwhile, the lithium manganese-based oxide defined by the present invention may further include a spinel phase and/or a spinel-like phase (hereinafter, unless defined otherwise, a spinel phase refers to both a spinel phase and a spinel-like phase), other than a phase belonging to a C2/m space group and a phase belonging to am R3-m space group. Here, the spinel phase may be a phase formed by the first and/or second oxide(s), and preferably, a phase formed by the second oxide, but the present invention is not necessarily limited thereto.

OLO such as the lithium manganese-based oxide defined by the present invention may have an advantage of being able to theoretically exhibit high capacity in a high-voltage operating environment, but actually, have disadvantages of relatively low electroconductivity due to an excess of Mn included in an oxide, and thus the rate characteristic (rate capability) of a lithium secondary battery using OLO is low. As such, when the rate characteristic is low, during cycling of the lithium secondary battery, there is a problem in that the charge/discharge capacity and lifetime efficiency (capacity retention) decrease.

During the cycling of the lithium secondary battery using OLO, a decrease in charge/discharge capacity or voltage decay is known to be induced by a phase change according to the migration of a transition metal in the lithium manganese-based oxide. For example, when a phase transition is induced by a transition metal in the lithium manganese-based oxide with a layered crystal structure moving an unintended direction, a spinel or a crystal structure similar thereto may be entirely and/or partially formed in the lithium manganese-based oxide.

However, unlike a spinel phase formed by a phase transition according to the migration of a transition metal in the lithium manganese-based oxide, when a spinel phase is formed on the surface of the primary and/or secondary particles, such a spinel phase may not only contribute to the surface stability of the lithium manganese-based oxide, but may also serve as a 2D and/or 3D path through which lithium ions in the lithium manganese-based oxide diffuse.

As the lithium ion diffusion path in the lithium manganese-based oxide is formed, the resistance to lithium-ion migration mediated by the lithium manganese-based oxide decreases, and thus the diffusion path may contribute to the improvement in rate characteristics of a lithium secondary battery that uses the lithium manganese-based oxide as a positive electrode active material.

The spinel phase may be present in a state of physically and/or chemically binding to the primary particle and/or the coating layer, or a partially-dissolved state.

In addition, the spinel phase may be present on at least a part of the interface between the primary particle and the coating layer.

As the first and/or second oxides diffuse(s) from the surface portion to the central portion of the secondary particle along the grain boundary between the primary particles, the proportion of the spinel phase and spinel-like phases in the entire crystal structure present in the surface portion of the secondary particle may be larger than that in the entire crystal structure present in the central portion of the secondary particle.

In addition, a gradient in which the proportion of the spinel phase or spinel-like phase in the entire crystal structure decreases from the surface portion to the central portion of the secondary particle may be formed.

As such, it is possible to prevent unintended voltage decay by allowing the spinel phase or spinel-like phase to mainly be present in the surface portion of the secondary particle.

The presence or absence of the spinel phase in the lithium manganese-based oxide may be confirmed from a dQ/dV profile during initial discharge of a lithium secondary battery using the lithium manganese-based oxide as a positive electrode active material.

For example, when a lithium secondary battery that uses a positive electrode active material including the lithium manganese-based oxide defined by the present invention as a positive electrode and a lithium foil as a negative electrode was charged/discharged under the following charge/discharge conditions,

[Charge/discharge conditions]

- Cut off voltage : 2.0V to 4.6V
- Charge : 1.0C (CC) / discharge : 1.0C (CC)

In a graph that uses a voltage (V) and a battery capacity (Q) for initial discharging and is plotted by a value (dQ/dV) obtained by differentiating the battery capacity (Q) with respect to the voltage (V), in which the X-axis is the voltage (V) and the Y-axis is the battery capacity (Q), there may be a peak in at least one region selected from a first voltage region (3.0V or more and less than 3.3V) and a second voltage region (2.7V or more and less than 3.0V), and preferably, the first voltage region.

Here, the peak appearing in the first voltage region (3.0V or more and less than 3.3V) indicates the presence of a spinel-like phase in the lithium manganese-based oxide, and the peak appearing in the second voltage region (2.7V or more and less than 3.0V) indicates the presence of an additional spinel phase in the lithium manganese-based oxide.

Here, the spinel phase and spinel-like phase are phases formed by the first and/or second oxides, and preferably, the second oxide, not phases formed from a phase belonging to a C2/m space group and/or a phase belonging to am R3-m space group, constituting the lithium manganese-based oxide, through a phase transition caused by the lifetime degradation of a positive electrode active material.

Lithium secondary battery

According to another embodiment of the present invention, a positive electrode including a positive electrode current collector and a positive electrode active material layer formed on the positive electrode current collector may be provided. Here, the positive electrode active material layer may include the above-described positive electrode active material prepared by a preparation method according to various embodiments of the present invention as a positive electrode active material.

Accordingly, a detailed description of the lithium manganese-based oxide will be omitted, and only the remaining components not described above will be described below. In addition, hereinafter, the above-described lithium manganese-based oxide is referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 μm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and a binder included optionally as needed.

Here, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve attachment between particles of the positive electrode active material and the adhesive strength between the positive electrode active material and a current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to prepare a positive electrode.

In addition, in another exemplary embodiment, the positive electrode may be prepared by casting the positive electrode slurry composition on a separate support, and laminating a film obtained by delamination from the support on the positive electrode current collector.

Still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator film and a liquid electrolyte, which are interposed between the positive electrode and the negative electrode. Here, since the positive electrode is the same as described above, for convenience, detailed description for the positive electrode will be omitted, and other components which have not been described below will be described in detail.

The lithium secondary battery may further include a battery case accommodating an electrode assembly of the positive electrode, the negative electrode and the separator film, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 μm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and a binder optionally included as needed.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as $SiO_\beta$ ($0<\beta<2$), $SnO_2$, vanadium oxide, or lithium vanadium oxide; or a composite including the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding bonding between a conductive material, an active material and a current collector, and may be generally added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber, nitrile-butadiene rubber, fluorine rubber, and various copolymers thereof.

The conductive material is a component for further improving conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, a separator film is not particularly limited as long as it is generally used in a lithium secondary battery to separate a negative electrode from a positive electrode and provide a diffusion path for lithium ions, and particularly, the separator film has a low resistance to ion mobility of a liquid electrolyte and an excellent electrolyte solution impregnation ability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator film including a ceramic component or a polymer material may be used to ensure thermal resistance or mechanical strength, and may be optionally used in a single- or multilayered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the transfer of ions involved in an electrochemical reaction of a battery. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charge/discharge performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$. The concentration of the lithium salt is preferably in the range of 0.1 to 2.0M. When the concentration of the lithium salt is included in the above-mentioned range, the electrolyte has suitable conductivity and viscosity and thus can exhibit excellent electrolytic performance. Therefore, lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element (here, X is at least one selected from P, As, Sb, Si, Ge, Sn, B, Al, Ga and In) and S may be used. Examples of the sulfide-based solid electrolyte material may include $Li_2S$-$P_2S_5$, $Li_2S$-$P_2S_5$-LiX (here, X is a halogen element such as I or Cl), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (here, m and n are integers, and Z is Ge, Zn or Ga), $Li_2S$-$GeS_2$, $Li_2S$-$SiS_2$-$Li_3PO_4$, and $Li_2S$-$SiS_2$-$Li_pMO_q$ (here, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include $Li_7La_3Zr_2O_{12}$, $Li_{7-x}La_3Zr_{1-x}Nb_xO_{12}$, $Li_{7-3x}La_3Zr_2Al_xO_{12}$, $Li_{3x}La_{2/3-x}TiO_3$, $Li_{1+x}Al_xTi_{2-x}(PO_4)_3$, $Li_{1+x}Al_xGe_{2-x}(PO_4)_3$, $Li_3PO_4$, $Li_{3+x}PO_{4-x}N_x$ (LiPON), and $Li_{2+2x}Zn_{1-x}GeO_4$ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance lifetime characteristics of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type using a can. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.

Preparation Example 1. Preparation of positive electrode active material

Example 1

(a) Preparation of precursor

An aqueous solution in which $NiSO_4 \cdot 6H_2O$ and $MnSO_4 \cdot H_2O$ were mixed in a molar ratio of 25:75, NaOH, and $NH_4OH$ were added in a reactor and stirred. The temperature in the reactor was maintained at 45 °C, and an $N_2$ gas was introduced into the reactor while a precursor synthesis reaction proceeded. After the reaction was completed, washing and dehydration were performed, thereby obtaining a hydroxide precursor with a composition of $Ni_{0.25}Mn_{0.75}(OH)_2$.

(b) First thermal treatment

After increasing the temperature of a furnace with an $O_2$ atmosphere at a rate of 2 °C/min and maintaining the temperature at 550 °C, the hydroxide precursor obtained in (a) was thermally treated for 5 hours, and then furnace cooling was performed, thereby obtaining an oxide-type precursor.

(c) Second thermal treatment

A mixture was prepared by mixing the precursor in an oxide state obtained in (b) and LiOH (Li/(metals excluding Li) mol ratio = 1.55).
Subsequently, after increasing the temperature of a furnace with an $O_2$ atmosphere at a rate of 2 °C/min and maintaining the temperature at 1,000 °C, the mixture was thermally treated for 8 hours, and furnace cooling was performed, thereby obtaining an overlithiated lithium manganese-based oxide.

(d) Wet coating (surface modification #1)

A mixture was prepared by dissolving $Al(NO_3)_3 \cdot 9H_2O$ in which the content of aluminum (Al) was weighed to be 0.3 mol% and $NH_4H_2PO_4$ in which the content of phosphorus (P) was weighed to be 0.3 mol%, based on metal elements except lithium of the lithium manganese-based oxide obtained in (c), in distilled water.
Subsequently, a lithium manganese-based oxide in which an Al-containing compound and a P-containing compound were distributed on its surface was obtained by introducing the lithium manganese-based oxide obtained in (c) into the above mixture, maintaining the temperature at 60 °C, and evaporating the distilled water by stirring at a rate of 350 rpm.

(e) Third thermal treatment (surface modification #2)

After increasing the temperature of a furnace with an $O_2$ atmosphere at a rate of 4.4 °C/min to 400 °C, the lithium manganese-based oxide obtained in (d) was thermally treated for 5 hours, and then distributed and disintegrated, thereby obtaining a surface-modified lithium manganese-based oxide (final product).

Example 2

A positive electrode active material was prepared in the same manner as in Example 1, except that $Al(NO_3)_3 \cdot 9H_2O$ weighed to be 0.3 mol% and $NH_4H_2PO_4$ weighed to be 3.0 mol% in (d) were used.

Example 3

A positive electrode active material was prepared in the same manner as in Example 1, except that $Al(NO_3)_3 \cdot 9H_2O$ weighed to be 0.1 mol% and $NH_4H_2PO_4$ weighed to be 3.0 mol% in (d) were used.

Comparative Example 1

A positive electrode active material was prepared in the same manner as in Example 1, except that (d) and (e) were not performed.

Comparative Example 2

(a) Preparation of precursor

An aqueous solution in which $NiSO_4 \cdot 6H_2O$ and $MnSO_4 \cdot H_2O$ were mixed in a molar ratio of 25:75, NaOH, and $NH_4OH$ were added in a reactor and stirred. The temperature in the reactor was maintained at 45 °C, and an $N_2$ gas was introduced into the reactor while a precursor synthesis reaction proceeded. After the reaction was completed, washing and dehydration were performed, thereby obtaining a hydroxide precursor with a composition of $Ni_{0.25}Mn_{0.75}(OH)_2$.

(b) First thermal treatment

After increasing the temperature of a furnace with an $O_2$ atmosphere at a rate of 2 °C/min and maintaining the temperature at 550 °C, the hydroxide precursor obtained in (a) was thermally treated for 5 hours, and furnace cooling was performed, thereby obtaining an oxide-type precursor.

(c) Second thermal treatment

A mixture was prepared by mixing the precursor in an oxide state obtained in (b) and LiOH (Li/(metals excluding Li) mol ratio = 1.55).
Subsequently, after increasing the temperature of a furnace with an $O_2$ atmosphere at a rate of 2 °C/min and maintaining the temperature at 800 °C, the mixture was thermally treated for 8 hours, and furnace cooling was performed, thereby obtaining an overlithiated lithium manganese-based oxide.

(d) Wet coating (surface modification #1)

A mixture was prepared by dissolving $Al(NO_3)_3 \cdot 9H_2O$ in which the content of aluminum (Al) was weighed to be 0.3 mol% and $NH_4H_2PO_4$ in which the content of phosphorus (P) was weighed to be 0.3 mol%, based on metal elements except lithium of the lithium manganese-based oxide obtained in (c), in distilled water.
Subsequently, a lithium manganese-based oxide in which an Al-containing compound and a P-containing compound were distributed on its surface was obtained by introducing the lithium manganese-based oxide obtained in (c) into the above mixture, maintaining the temperature at 60 °C, and evaporating the distilled water by stirring at a rate of 350 rpm.

(e) Third thermal treatment (surface modification #2)

After increasing the temperature of a furnace with an $O_2$ atmosphere at a rate of 4.4 °C/min to 400 °C, the lithium manganese-based oxide obtained in (d) was thermally treated for 5 hours, and then distributed and disintegrated, thereby obtaining a surface-modified lithium manganese-based oxide (final product).

Comparative Example 3

(a) Preparation of precursor

An aqueous solution in which $NiSO_4 \cdot 6H_2O$ and $MnSO_4 \cdot H_2O$ were mixed in a molar ratio of 25:75, NaOH and $NH_4OH$ were added in a reactor and stirred. The temperature in the reactor was maintained at 45 °C, and an $N_2$ gas was introduced into the reactor while a precursor synthesis reaction proceeded. After the reaction was completed, washing and dehydration were performed, thereby obtaining a hydroxide precursor with a composition of $Ni_{0.25}Mn_{0.75}(OH)_2$.

(b) First thermal treatment

After increasing the temperature of a furnace with an $O_2$ atmosphere at a rate of 2 °C/min and maintaining the temperature at 900 °C, the hydroxide precursor obtained in (a) was thermally treated for 5 hours, and furnace cooling was performed, thereby obtaining an oxide-type precursor.

(c) Second thermal treatment

A mixture was prepared by mixing the precursor in an oxide state obtained in (b) and LiOH (Li/(metals excluding Li) mol ratio = 1.55).

Subsequently, after increasing the temperature of a furnace with an $O_2$ atmosphere at a rate of 2 °C/min and maintaining the temperature at 1,000 °C, the mixture was thermally treated for 8 hours, and furnace cooling was performed, thereby obtaining an overlithiated lithium manganese-based oxide.

(d) Wet coating (surface modification #1)

A mixture was prepared by dissolving $Al(NO_3)_3 \cdot 9H_2O$ in which the content of aluminum (Al) was weighed to be 0.3 mol% and $NH_4H_2PO_4$ in which the content of phosphorus (P) was weighed to be 0.3 mol%, based on metal elements except lithium of the lithium manganese-based oxide obtained in (c), in distilled water.

Subsequently, a lithium manganese-based oxide in which an Al-containing compound and a P-containing compound were distributed on its surface was obtained by introducing the lithium manganese-based oxide obtained in (c) into the above mixture, maintaining the temperature at 60 °C, and evaporating the distilled water by stirring at a rate of 350 rpm.

(e) Third thermal treatment (surface modification #2)

After increasing the temperature of a furnace with an $O_2$ atmosphere at a rate of 4.4 °C/min to 400 °C, the lithium manganese-based oxide obtained in (d) was thermally performed for 5 hours, and then distributed and disintegrated, thereby obtaining a surface-modified lithium manganese-based oxide (final product).

Reference Example 1

A positive electrode active material was prepared in the same manner as in Example 1, except that $Al(NO_3)_3 \cdot 9H_2O$ weighed to be 1.5 mol% and $NH_4H_2PO_4$ weighed to be 1.0 mol% in (d) were used.

Reference Example 2

A positive electrode active material was prepared in the same manner as in Example 1, except that $Al(NO_3)_3 \cdot 9H_2O$ weighed to be 0.01 mol% and $NH_4H_2PO_4$ weighed to be 3.0 mol% in (d) were used.

Reference Example 3

A positive electrode active material was prepared in the same manner as in Example 1, except that $Al(NO_3)_3 \cdot 9H_2O$ weighed to be 0.01 mol% and $NH_4H_2PO_4$ weighed to be 0.01 mol% in (d) were used.

Reference Example 4

(a) Preparation of precursor

An aqueous solution in which $NiSO_4 \cdot 6H_2O$ and $MnSO_4 \cdot H_2O$ were mixed in a molar ratio of 25:75, NaOH and $NH_4OH$ were added in a reactor and stirred. The temperature in the reactor was maintained at 45 °C, and an $N_2$ gas was introduced into the reactor while a precursor synthesis reaction proceeded. After the reaction was completed, washing and dehydration were performed, thereby obtaining a hydroxide precursor with a composition of $Ni_{0.25}Mn_{0.75}(OH)_2$.

(b) First thermal treatment

After increasing the temperature of a furnace with an $O_2$ atmosphere at a rate of 2 °C/min and maintaining the temperature at 550 °C, the hydroxide precursor obtained in (a) was thermally treated for 5 hours, and furnace cooling was performed, thereby obtaining an oxide-type precursor.

(c) Second thermal treatment

A mixture was prepared by mixing the precursor in an oxide state obtained in (b) and LiOH (Li/(metals excluding Li) mol ratio = 1.55).

Subsequently, after increasing the temperature of a furnace with an $O_2$ atmosphere at a rate of 2 °C/min and maintaining the temperature at 1,000 °C, the mixture was thermally treated for 8 hours, and furnace cooling was performed, thereby obtaining an overlithiated lithium manganese-based oxide.

(d) Wet coating (surface modification #1)

A mixture was prepared by dissolving $Al(NO_3)_3 \cdot 9H_2O$ in which the content of aluminum (Al) was weighed to be 0.3 mol% and $NH_4H_2PO_4$ in which the content of phosphorus (P) was weighed to be 3.0 mol%, based on metal elements except lithium of the lithium manganese-based oxide obtained in (c), in distilled water.

Subsequently, a lithium manganese-based oxide in which an Al-containing compound and a P-containing compound were distributed on its surface was obtained by introducing the lithium manganese-based oxide obtained in (c) into the above mixture, maintaining the temperature at 60 °C, and evaporating the distilled water by stirring at a rate of 350 rpm.

(e) Third thermal treatment (surface modification #2)

After increasing the temperature of a furnace with an $O_2$ atmosphere at a rate of 4.4 °C/min to 600 °C, the lithium manganese-based oxide obtained in (d) was thermally treated for 5 hours, and then distributed and disintegrated, thereby obtaining a surface-modified lithium manganese-based oxide (final product).

Composition of lithium manganese-based oxide

The composition (molar ratio for each element) of a lithium manganese-based oxide included in each of the positive electrode active materials prepared according to Preparation Example 1 was measured through ICP analysis.
The measurement results are shown in Table 1 below.

[Table 1]

| Classification | Li/Me Molar ratio | Element content (mol%) | | | | P/Al Molar ratio |
|---|---|---|---|---|---|---|
| | | Ni | Mn | Al | P | |
| Example 1 | 1.55 | 24.7 | 74.6 | 0.32 | 0.36 | 1.13 |
| Example 2 | 1.53 | 24.3 | 72.4 | 0.28 | 3.04 | 10.86 |
| Example 3 | 1.52 | 24.2 | 72.5 | 0.12 | 3.15 | 26.25 |
| Comparative Example 1 | 1.56 | 25.1 | 74.9 | 0 | 0 | - |
| Comparative Example 2 | 1.55 | 24.8 | 74.6 | 0.28 | 0.31 | 1.1 |
| Comparative Example 3 | 1.57 | 24.7 | 74.6 | 0.31 | 0.36 | 1.2 |
| Reference Example 1 | 1.54 | 24.3 | 73.2 | 1.49 | 1.04 | 0.7 |
| Reference Example 2 | 1.55 | 23.9 | 73.1 | 0.01 | 2.98 | 298 |
| Reference Example 3 | 1.56 | 25.1 | 74.9 | 0.01 | 0.01 | 1.1 |
| Reference Example 4 | 1.53 | 24.3 | 72.4 | 0.31 | 3.07 | 9.9 |
| *Li/Metal Molar ratio is a molar ratio of lithium to all elements except lithium in the lithium manganese-based oxide. *The element content (mol%) is calculated based on all elements except lithium in the lithium manganese-based oxide. | | | | | | |

Preparation Example 2. Manufacture of lithium secondary battery (half-cell)

A positive electrode slurry was prepared by dispersing 90 wt% of each of the positive electrode active materials prepared according to Preparation Example 1, 5.5 wt% of carbon black, and 4.5 wt% of a PVDF binder in 30 g of N-methyl-2 pyrrolidone (NMP). The positive slurry was uniformly applied on an aluminum thin film with a thickness of 15 $\mu$m and dried under vacuum at 135 °C, thereby manufacturing a positive electrode for a lithium secondary battery.

Lithium foil as a counter electrode for the positive electrode, a porous polyethylene film (Celgard 2300, thickness: 25 $\mu$m) as a separator, and a liquid electrolyte prepared by adding LiPF$_6$ at 1.15M in a solvent in which ethylene carbonate, dimethyl carbonate and ethyl methyl carbonate were mixed in a volume ratio of 2:4:4 were used, thereby manufacturing a half-cell.

Experimental Example 1. Image analysis of positive electrode active material

After selecting a lithium manganese-based oxide in the form of a secondary particle from each of the positive electrode active materials prepared according to Preparation Example 1, an SEM image was obtained through photographing with a scanning electron microscope.

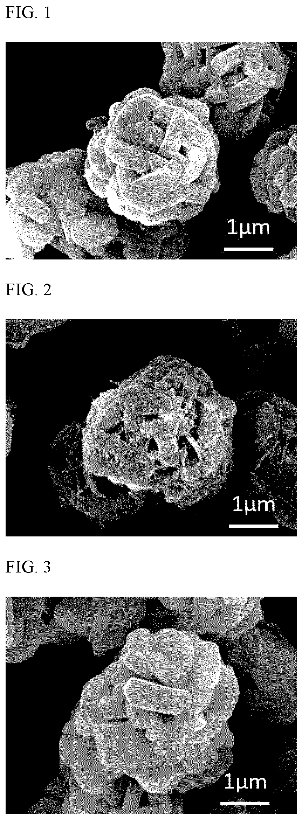

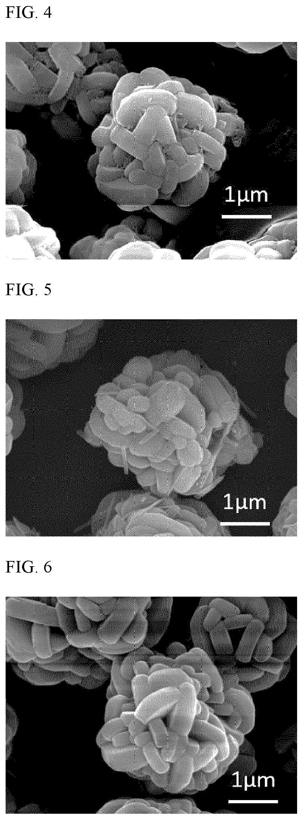

FIGS. 1 and 2 are SEM images of lithium manganese-based oxides included in the positive electrode active materials according to Examples 1 and 2, respectively, FIG. 3 is an SEM image of a lithium manganese-based oxide included in the positive electrode active material according to Comparative Example 1, and FIGS. 4 to 6 are SEM images of lithium manganese-based oxides included in the positive electrode active materials according to Reference Examples 1 to 3, respectively.

Subsequently, 20 primary particles were selected in the order from longest-to-shortest minor axis lengths from the primary particles exposed on the surface of the secondary particle from the SEM image using an Image analyzer program, and the major axis length and the minor axis length were measured. From the measurement results, the average value of the minor axis lengths of primary particles and the average particle diameter ([major axis length+minor axis length]/2) of the primary particles were calculated.

The measurement results are shown in Table 2 below.

[Table 2]

| Classification | Minor axis length (nm) | Average particle diameter of primary particles ($\mu$m) |
|---|---|---|
| Example 1 | 344.2 | 0.65 |
| Example 2 | 334.7 | 0.59 |
| Example 3 | 339.2 | 0.61 |
| Comparative Example 1 | 288.2 | 0.63 |
| Comparative Example 2 | 129.9 | 0.17 |
| Comparative Example 3 | 850.9 | 1.08 |
| Reference Example 1 | 317.4 | 0.58 |
| Reference Example 2 | 352.7 | 0.59 |
| Reference Example 3 | 316.4 | 0.55 |
| Comparative Example 4 | 324.0 | 0.58 |

Referring to the results of Table 2, it can be confirmed that, in the lithium manganese-based oxides included in each of the positive electrode active materials according to Examples 1 to 3, primary particles are grown within an appropriate range.

On the other hand, it can be confirmed that, in the lithium manganese-based oxide included in the positive electrode active material according to Comparative Example 2, as the crystal growth or particle growth of primary particles is not sufficiently induced, the average value of the minor axis lengths of primary particles is smaller than 130 nm, and the average particle diameter of the primary particles is also relatively small.

In addition, it can be confirmed that, in the lithium manganese-based oxide included in the positive electrode active material according to Comparative Example 3, as the crystal growth or particle growth of primary particles is excessively induced, the average value of the minor axis lengths of primary particles is greater than 850 nm, and the average particle diameter of the primary particles is also relatively large.

Experimental Example 2. Analysis of crystal structure of positive electrode active material

The lithium manganese-based oxide included in each of the positive electrode active materials prepared in Preparation Example 1 was selected, subjected to cross-sectioning with a cross-section polisher (acceleration voltage: 5.0 kV, 4-hour milling), and photographed with a transmission electron microscope, thereby obtaining a cross-sectional TEM image.

Subsequently, as a result of confirming the crystal structure in the lithium manganese-based oxide by making the cross-sectional TEM image into a diffraction pattern through fast Fourier transform (FFT) and indexing, it can be confirmed that the lithium manganese-based oxide included in each of the positive electrode active materials prepared in Preparation Example 1 is a solid solution with a crystal structure in which a phase belonging to a C2/m space group and a phase belonging to an R3-m space group coexist in one particle, a so called overlithiated lithium manganese-based oxide.

In addition, for the lithium secondary batteries manufactured in Preparation Example 2 using the positive electrode active materials according to Examples 1 to 3, Comparative Example 1, Reference Examples 3 and 4, after completing 2 cycles of formation with an electrochemical analyzer (Toyo, Toscat-3100) at 25 °C in a voltage range of 2.0V to 4.6V under the condition of 0.1C/0.1C, charging/discharging was performed at 25 °C in a voltage range of 2.0V to 4.6V under the condition of 1C/1C.

Here, a dQ/dV profile was calculated with a voltage (V) and a battery capacity (Q), measured in initial discharge according to the charge/discharge conditions by differentiating the battery capacity (Q) with respect to the voltage (V), in which the X-axis is the voltage (V) and the Y-axis is the battery capacity (Q).

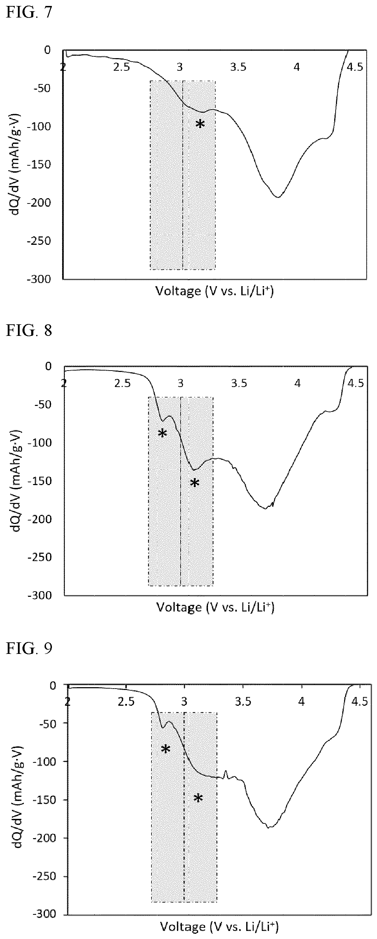

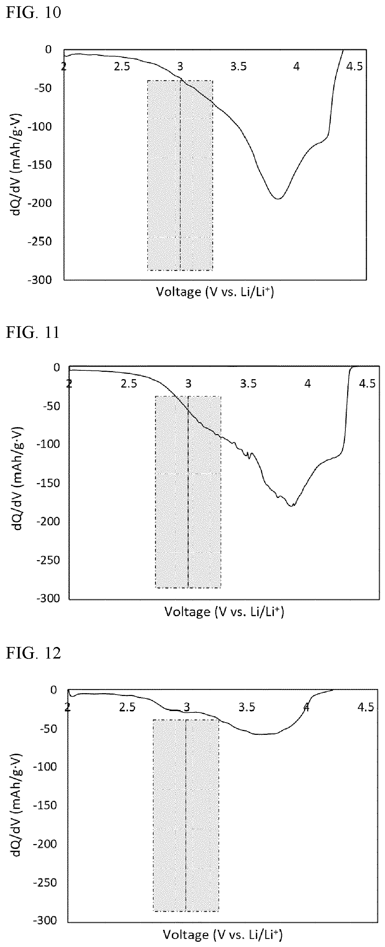

FIGS. 7 to 9 show dQ/dV profiles during initial discharging of lithium secondary batteries manufactured using the positive electrode active materials according to Examples 1 to 3, respectively, FIG. 10 shows a dQ/dV profile during initial discharging of a lithium secondary battery manufactured using the positive electrode active material according to Comparative Example 1, and FIGS. 11 and 12 show dQ/dV profiles during initial discharging of lithium secondary batteries manufactured using the positive electrode active materials according to Reference Examples 3 and 4, respectively.

Referring to FIG. 10, in the initial discharge of a lithium secondary battery using the positive electrode active material according to Comparative Example 1 in which the lithium manganese-based oxide was not subjected to surface modification, it can be confirmed that the dQ/dV profile does not show any significant peak in a first voltage region (3.0V or more and less than 3.3V) and a second voltage region (2.7V or more and less than 3.0V).

On the other hand, referring to FIGS. 7 and 8, in the initial discharge of the lithium secondary battery manufactured using the positive electrode active material according to Example 1 and the lithium secondary battery manufactured using the positive electrode active material according to Example 2, it can be confirmed that the dQ/dV profile shows a peak in the first voltage region (3.0V or more and less than 3.3V). The peak appearing in the first voltage region (3.0V or more and less than 3.3V) means that a spinel-like phase is further present in the lithium manganese-based oxide.

In addition, referring to FIGS. 8 and 9, in the initial discharge of the lithium secondary battery manufactured using the positive electrode active material according to Example 2 and the lithium secondary battery manufactured using the positive electrode active material according to Example 3, it can be confirmed that the dQ/dV profile shows an additional peak in the second voltage region (2.7V or more and less than 3.0V). The peak appearing in the second voltage region (2.7V or more and less than 3.0V) means that a spinel phase is further present in the lithium manganese-based oxide. That is, it can be seen that the lithium manganese-based oxide included in the positive electrode active material according to Example 2 includes the same spinel phase and spinel-like phase as thsoe of the lithium manganese-based oxide included in the positive electrode active material according to Example 3.

Meanwhile, referring to FIGS. 11 and 12, in the initial discharge of the lithium secondary battery manufactured using the positive electrode active material according to Reference Example 3 and the lithium secondary battery manufactured using the positive electrode active material according to Reference Example 4, it can be confirmed that the dQ/dV profile does not show any significant peak in a first voltage region (3.0V or more and less than 3.3V) and a second voltage region (2.7V or more and less than 3.0V).

In the case of Reference Example 3, it is expected that the A1-containing compound and the P-containing compound used in (d) are too small to exhibit a sufficient modification effect on the surface of the lithium manganese-based oxide. Particularly, it is expected that the second oxide containing phosphorus (P) is not sufficiently formed in a coating layer present on the surface of the lithium manganese-based oxide, and thus a spinel phase and/or a spinel-like phase is(are) not formed, either.

Likewise, in the case of Reference Example 4, due to the excessively high temperature of the third thermal treatment, it is expected that the surface modification intended by the present invention is not expressed.

Experimental Example 3. Analysis of surface modification element for positive electrode active material

The lithium manganese-based oxide included in each of the positive electrode active materials according to Examples 1 and 2 was subjected to cross-sectioning using a cross-section polisher (acceleration voltage: 5.0 kV, 4-hour milling), and photographed with a scanning electron microscope, thereby obtaining a cross-sectional SEM image.

Subsequently, after EDS mapping of target elements Ni, Mn, Al and P based on the cross-sectional SEM image, the contents (mol%) of the target elements in the surface portion to the central portion of a secondary particle were measured from a line sum spectrum.

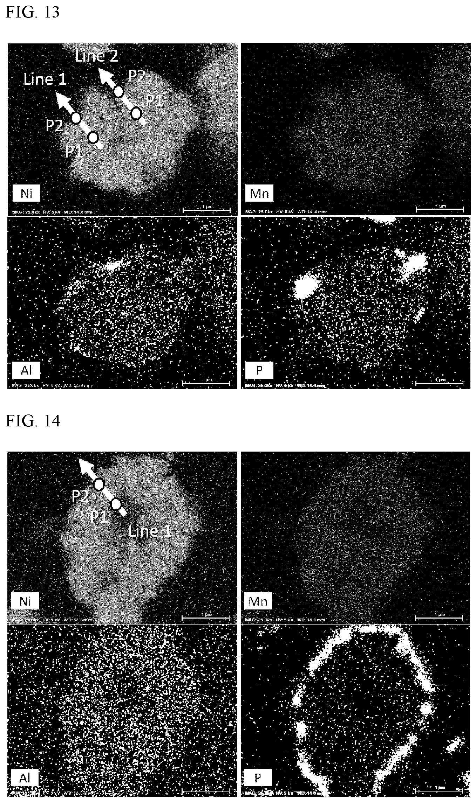

The EDS mapping results are shown in FIGS. 13 and 14, and Table 3.

[Table 3]

| Classification | | Target element | Content (mol%) | | |
|---|---|---|---|---|---|
| | | | Bulk (ICP) | P1 | P2 |
| Example 1 | Line 1 | Al | 0.32 | 0.000 | 5.337 |
| | | P | 0.36 | 0.789 | 86.731 |
| | | Ni+Mn | 99.33 | 99.211 | 7.932 |
| | Line 2 | Al | - | 0.501 | 42.840 |
| | | P | - | 0.364 | 1.942 |
| | | Ni+Mn | - | 99.135 | 55.218 |
| Example 2 | Line 1 | Al | 0.28 | 0.004 | 3.531 |
| | | P | 3.04 | 0.132 | 59.134 |
| | | Ni+Mn | 96.65 | 99.863 | 37.335 |

*The content (mol%) of a target element is calculated based on all elements except lithium in the lithium manganese-based oxide.
*Bulk (ICP) is the content (mol%) of each target element when the sum of the contents of Ni, Mn, Al and P in the lithium manganese-based oxide is 100 mol%.
*P1 is a point relatively close to the central portion of a secondary particle among the points marked on lines (Line 1 and Line 2), and P2 is a point relatively close to the surface portion of a secondary particle.

Referring to the EDS mapping results, it can be confirmed that Al and P in the lithium manganese-based oxide are partially present in the central portion of a secondary particle as well in the surface portion of the secondary particle. In addition, it can be confirmed that Al and P in the lithium manganese-based oxide have concentration gradients decreasing from the surface portion to the central portion of the secondary particle.

From the above result, it can be expected that a first oxide including Al and a second oxide including phosphorus (P) also have the concentration gradients decreasing from the surface portion to the central portion of the secondary particle. Accordingly, when a spinel phase and/or a spinel-like phase is(are) formed in the surface portion of the secondary particle through the surface modification of the lithium manganese-based oxide, the spinel and/or spinel-like phase(s) may also have a concentration gradient decreasing from the surface portion to the central portion of the secondary particle.

In addition, the first and/or second oxide(s) having a concentration gradient decreasing from the surface portion to the central portion of the secondary particle diffuse from the surface portion to the central portion of the secondary particle along the grain boundary between the primary particles constituting the secondary particle.

Experimental Example 4. Evaluation of electrochemical properties of lithium secondary battery

A charging/discharging experiment was performed on each of the lithium secondary batteries (half-cell) manufactured in Preparation Example 2 using an electrochemical analyzer (Toyo, Toscat-3100) at 25 °C in a voltage range of 2.0V to 4.6V at a discharge rate of 0.1C to 5.0C to measure an initial charge capacity, an initial discharge capacity, an initial reversible efficiency, and a rate characteristic (rate capability (C-rate)).

In addition, after 50 cycles of charging/discharging were performed on the same lithium secondary battery at 25 °C in an operating voltage range of 2.0V to 4.6V under the condition of 1C/1C, and then the rate capability at the 50th cycle relative to the initial capacity (capacity retention) was measured.

The measurement results are shown in Tables 4 and 5 below.

[Table 4]

| Classification | Initial discharge capacity (0.1C-rate) | Initial reversible efficiency | Rate capability (2C/0.1C) | Rate capability (5C/0.1C) |
|---|---|---|---|---|
| Units | mAh/g | mAh/g | % | % |
| Example 1 | 234 | 84.5 | 70.0 | 58.8 |
| Example 2 | 239 | 86.0 | 75.8 | 63.2 |
| Example 3 | 238 | 86.2 | 74.2 | 62.4 |
| Comparative Example 1 | 228 | 75.0 | 64.4 | 52.9 |
| Comparative Example 2 | 207 | 84.4 | 62.8 | 49.8 |
| Comparative Example 3 | 183 | 72.1 | 42.2 | 25.1 |
| Reference Example 1 | 229 | 80.8 | 64.8 | 53.7 |
| Reference Example 2 | 234 | 85.5 | 69.7 | 57.9 |
| Reference Example 3 | 230 | 75.5 | 65.0 | 54.2 |
| Reference Example 4 | 110 | 95.3 | 25.9 | 7.0 |

[Table 5]

| Classification | Initial discharge capacity (1C-rate) | Capacity retention (1C-rate, 50cycle) |
|---|---|---|
| Units | mAh/g | % |
| Example 1 | 183 | 97.4 |
| Example 2 | 207 | 96.7 |
| Example 3 | 198 | 96.9 |
| Comparative Example 1 | 165 | 95.2 |

Referring to the results of Table 4, it can be confirmed that a lithium secondary battery using the positive electrode active material according to Comparative Example 1, which was not subjected to surface modification of the lithium manganese-based oxide exhibits a lower initial discharge capacity, lower initial reversible efficiency, and lower rate capability than lithium secondary batteries using the positive electrode active materials including the lithium manganese-based oxides according to Examples 1 to 3. In addition, it can be confirmed that the lithium secondary batteries using the positive electrode active materials including the lithium manganese-based oxides according to Examples 1 to 3 exhibit a higher initial discharge capacity and a higher capacity retention than a lithium secondary battery using the positive electrode active material of Comparative Example 1.

Likewise, it can be confirmed that lithium secondary batteries using the positive electrode active materials including the lithium manganese-based oxides according to Comparative Examples 2 and 3 exhibit an excessively low initial discharge capacity, excessively low initial reversible efficiency and excessively low rate capability compared to the lithium secondary batteries using the positive electrode active materials of Examples 1 to 3.

It can be confirmed that lithium secondary batteries using the positive electrode active materials including the lithium manganese-based oxides according to Reference Examples 1 to 3 generally exhibit improved electrochemical properties compared to the lithium secondary batteries using the positive electrode active materials of Comparative Examples 1 to 3. However, it can be confirmed that, as the content of A1 derived from the first oxide, the content of P derived from the second oxide, and/or a content ratio of Al and P designed differently from the lithium manganese-based oxides according to Examples 1 to 3, the lithium secondary batteries using the positive electrode active materials including the lithium manganese-based oxides according to Reference Examples 1 to 3 exhibit slightly lower initial reversible efficiency or rate capability than lithium secondary batteries using the positive electrode active materials of Examples 1 to 3.

In addition, it can be confirmed that a lithium secondary battery using the positive electrode active material including the lithium manganese-based oxide according to Reference Example 4 exhibits an excessively low initial discharge capacity, an excessively low reversible efficiency, and an excessively low rate capability compared to the lithium secondary batteries using those of Reference Examples 1 to 3 and the lithium secondary batteries using the positive electrode active materials of Examples 1 to 3.

As confirmed in Experimental Example 2, it is expected that the above results are due to surface damage to the lithium manganese-based oxide occurring, instead of the surface modification intended by the present invention, because the third thermal treatment temperature for a lithium manganese-based oxide with Al-containing and P-containing compounds distributed on its surface is excessively high.

According to the present invention, it is possible to improve the limitations of a conventional overlithiated lithium manganese-based oxide, which has several disadvantageous aspects in terms of electrochemical properties and/or stability when comparing with a commercially available ternary lithium composite oxide with a nickel-cobalt-manganese (NCM) or nickel-cobalt-aluminum (NCA) composition.

Specifically, according to the present invention, it is possible to reduce side reactions between the lithium manganese-based oxide and the liquid electrolyte by forming a physical barrier between the lithium manganese-based oxide and a liquid electrolyte through the surface modification of the lithium manganese-based oxide. Particularly, OLO such as the lithium manganese-based oxide is advantageous for exhibiting a high capacity under a high-voltage operating environment, and it is important to reduce side reactions between the lithium manganese-based oxide and the liquid electrolyte because the possibility of side reactions between the lithium manganese-based oxide and the liquid electrolyte can be promoted as an operating voltage increases.

Accordingly, as the side reactions between the lithium manganese-based oxide and the liquid electrolyte decrease, the stability and lifetime of a lithium secondary battery using the lithium manganese-based oxide as a positive electrode active material can be improved. Particularly, it is possible for the lithium secondary battery to be operated at a higher voltage with a positive electrode active material having suppressed side reactions with a liquid electrolyte. Here, in the surface modification of the lithium manganese-based oxide, it is possible to form a spinel phase on at least a part of the surface of the lithium manganese-based oxide.

Here, unlike a spinel phase formed by a phase transition according to the migration of transition metals in the lithium manganese-based oxide, a spinel phase formed on the surface of the lithium manganese-based oxide through the surface modification of the lithium manganese-based oxide serves as a 2D and/or 3D path through which lithium ions in the lithium manganese-based oxide diffuse, as a result, contributing to an improvement in diffusivity of overall lithium ions (Li+ diffusivity) of the lithium manganese-based oxide.

In addition, when the above-described surface modification is applied after reducing a specific surface area through the induction of the crystal growth or particle growth of primary particles constituting the lithium manganese-based oxide, the surface modification effect intended by the present invention (e.g., improvement in diffusivity of lithium ions) can be further improved.

As the crystal growth or particle growth of primary particles constituting the lithium manganese-based oxide is induced, the intercalation/deintercalation efficiency of lithium ions from the primary particle and a secondary particle formed by aggregating a plurality of the primary particles can be improved. Here, when surface modification for improving surface kinetics such as the charge transfer and/or diffusivity of lithium ions on at least a part of the surface of the primary particle in a state of inducing the growth of the primary particles is made, the degradation in rate characteristics caused by an excess of lithium and manganese in the lithium manganese-based oxide can be effectively mitigated and/or prevented.

As such, when a positive electrode including the positive electrode active material defined herein is used, the degradation in rate characteristics caused by an excess of lithium and manganese in conventional OLO can be mitigated and/or prevented, and side reactions between the positive electrode active material and a liquid electrolyte during high-voltage operation can be reduced, thereby realizing high stability.

In addition to the above effects, specific effects of the present invention will be described together while explaining specific details for carrying out the present invention.

In the above, the embodiments of the present invention have been described, but it will be understood by those of ordinary skill in the art that the present invention may be changed and modified in various ways by addition, alteration, or deletion of components without departing from the spirit of the present invention defined in the appended claims.

**Claims**

1.  A positive electrode active material comprising a lithium manganese-based oxide in which a phase belonging to a C2/m space group and a phase belonging to an R3-m space group are dissolved or complexed,

    in which the lithium manganese-based oxide comprises a secondary particle formed by aggregating a plurality of primary particles,

    an average value of the minor axis lengths of the primary particles calculated from 20 primary particles selected in the order from longest-to-shortest minor axis lengths from the primary particles exposed on a surface of the secondary particle from the SME image of the secondary particle is 130 nm or more and less than 850 nm, and

    a coating layer comprising a first oxide containing at least one selected from a metal element and a metalloid element and a second oxide containing phosphorus (P) is formed on at least a part of the surface of the primary particle.

2.  The positive electrode active material of claim 1, wherein the lithium manganese-based oxide is represented by Formula 1 below:

    [Formula 1]        $Li(Li_aM1_xM2_y)O_{2-b}X_b$

    Wherein,

    M1 is at least one selected from Ni and Mn,

    M2 is at least one selected from Ni, Mn, Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, and M2 does not overlap with M1,

    X is a halogen that can substitute for at least some of the oxygen present in the lithium manganese-based oxide,

    $0<a\leq0.7$, $0\leq b\leq0.1$, $0<x\leq1$, $0\leq y<1$, and $0<x+y\leq1$.

3.  The positive electrode active material of claim 1, wherein the coating layer is formed on at least a part of the surface of the primary particle present in the surface portion of the secondary particle.

4.  The positive electrode active material of claim 2, wherein a gradient in which the proportion of at least one selected from x and y in Formula 1 changes from the surface portion to the central portion of the secondary particle is formed.

5.  The positive electrode active material of claim 2, wherein M2 comprises phosphorus (P), and

    a gradient in which the concentration of phosphorus (P) decreases from the surface portion to the central portion of the secondary particle is formed.

6.  The positive electrode active material of claim 1, wherein the first oxide is represented by Formula 2 below,

    [Formula 2]        $Li_cM3_dO_e$

    Wherein,

    M3 is at least one selected from Ni, Mn, Co, Al, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd,

    $0\leq c\leq10$, $0\leq d\leq8$, $0<e\leq13$, and the case in which c and d are 0 at the same time is excluded.

7.  The positive electrode active material of claim 6, wherein the coating layer is formed on at least a part of the surface of the primary particle present in the surface portion of the secondary particle, and

    a gradient in which the concentration of M3 decreases from the surface portion to the central portion of the secondary particle is formed.

8.  The positive electrode active material of claim 1, wherein the second oxide is represented by Formula 3 below,

    [Formula 3]        $Li_fM4_g(P_hO_i)_j$

    Wherein,

M4 is at least one selected from Ni, Mn, Co, Al, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd,
$0 \leq f \leq 10$, $0 \leq g \leq 8$, $0 < h \leq 4$, $0 < i \leq 10$, and $0 < j \leq 13$.

9. The positive electrode active material of claim 8, wherein the coating layer is formed on at least a part of the surface of the primary particle present in the surface portion of the secondary particle, and
a gradient in which at least one of the concentrations of M4 and P decreases from the surface portion to the central portion of the secondary particle is formed.

10. The positive electrode active material of claim 1, wherein the coating layer comprises a first oxide represented by Formula 2 below and a second oxide represented by Formula 3 below,

[Formula 2]    $Li_c M3_d O_e$

Wherein,

M3 is at least one selected from Ni, Mn, Co, Al, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd,
$0 \leq c \leq 10$, $0 \leq d \leq 8$, $0 < e \leq 13$, and the case in which c and d are 0 at the same time is excluded,

[Formula 3]    $Li_f M4_g (P_h O_i)_j$

Wherein,

M4 is at least one selected from Ni, Mn, Co, Al, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd,
$0 \leq f \leq 10$, $0 \leq g \leq 8$, $0 < h \leq 4$, $0 < i \leq 10$, and $0 < j \leq 13$, and
the mole fractions of M3, M4 and P, calculated by Expression 1 below, in the positive electrode active material is 1.0 to 30.0,

[Expression 1]

$$P \text{ (mol\%)}/(M3 \text{ (mol\%)} + M4 \text{ (mol\%)}).$$

11. The positive electrode active material of claim 10, wherein the coating layer is formed on at least a part of the surface of the primary particle present in the surface portion of the secondary particle, and
a gradient in which at least one of the concentrations of M3, M4 and P decreases from the surface portion to the central portion of the secondary particle is formed.

12. The positive electrode active material of claim 1, wherein the lithium manganese-based oxide further comprises at least one phase selected from a spinel phase and a spinel-like phase.

13. The positive electrode active material of claim 12, wherein the spinel phase or spinel-like phase is dissolved or complexed with at least one selected from the primary particle and the coating layer.

14. The positive electrode active material of claim 12, wherein the spinel phase or spinel-like phase is present at at least a part of the interface between the primary particle and the coating layer.

15. The positive electrode active material of claim 1, wherein, when a lithium secondary battery using the positive electrode active material as a positive electrode and a lithium foil as a negative electrode is charged/discharged under the following charge/discharge conditions,
[Charge/discharge conditions]

- Cut off voltage : 2.0V ~ 4.6V
- Charge : 1.0C (CC) / discharge : 1.0C (CC)

In a graph that uses a voltage (V) and a battery capacity (Q) for initial discharging and is plotted by a value (dQ/dV) obtained by differentiating the battery capacity (Q) with respect to the voltage (V), in which the X-axis is the voltage (V) and the Y-axis is the battery capacity (Q), there is a peak in at least one region selected from a first voltage region (3.0V or more and less than 3.3V) and a second voltage region (2.7V or more and less than 3.0V).

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

Europäisches
Patentamt

European
Patent Office

Office européen
des brevets

# EUROPEAN SEARCH REPORT

**Application Number**

EP 23 17 1147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIU YECHAO ET AL: "Enhanced electrochemical performance of Al(NO3)3 and NH4H2PO4 co-modified Li1.11(Ni0.19Co0.07Mn0.6)O2", CERAMICS INTERNATIONAL, ELSEVIER, AMSTERDAM, NL, vol. 46, no. 7, 25 December 2019 (2019-12-25), pages 9464-9473, XP086091120, ISSN: 0272-8842, DOI: 10.1016/J.CERAMINT.2019.12.207 [retrieved on 2019-12-25] * page 9465 - page 9471; figures * ----- | 1-15 | INV. C01G45/02 C01G53/00 H01M4/00 |
| X | EP 4 024 515 A1 (SVOLT ENERGY TECH CO LTD [CN]) 6 July 2022 (2022-07-06) * paragraph [0024] - paragraph [0026] * * paragraph [0048] - paragraph [0052]; examples * ----- | 1-15 | |
| X | US 2019/074514 A1 (WU HUIMING [US] ET AL) 7 March 2019 (2019-03-07) * paragraph [0159] - paragraph [0197]; figures; examples 3,4,6,8,9,23 * ----- | 1-15 | TECHNICAL FIELDS SEARCHED (IPC) C01G H01M |
| A | WO 2022/119156 A1 (ECOPRO BM CO LTD [KR]) 9 June 2022 (2022-06-09) ----- | 1-15 | |

The present search report has been drawn up for all claims

| Place of search | Date of completion of the search | Examiner |
|---|---|---|
| Munich | 15 March 2024 | Doslik, Natasa |

EPO FORM 1503 03.82 (P04C01)

## ANNEX TO THE EUROPEAN SEARCH REPORT
## ON EUROPEAN PATENT APPLICATION NO.

EP 23 17 1147

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2024

| Patent document cited in search report | | | Publication date | Patent family member(s) | | | Publication date |
|---|---|---|---|---|---|---|---|
| EP | 4024515 | A1 | 06-07-2022 | CN | 111435737 | A | 21-07-2020 |
| | | | | EP | 4024515 | A1 | 06-07-2022 |
| | | | | US | 2023048254 | A1 | 16-02-2023 |
| | | | | WO | 2021196732 | A1 | 07-10-2021 |
| US | 2019074514 | A1 | 07-03-2019 | CN | 109075333 | A | 21-12-2018 |
| | | | | CN | 109075334 | A | 21-12-2018 |
| | | | | CN | 109328409 | A | 12-02-2019 |
| | | | | CN | 113149083 | A | 23-07-2021 |
| | | | | CN | 114068898 | A | 18-02-2022 |
| | | | | CN | 114583154 | A | 03-06-2022 |
| | | | | CN | 115394997 | A | 25-11-2022 |
| | | | | CN | 115395008 | A | 25-11-2022 |
| | | | | US | 2017263917 | A1 | 14-09-2017 |
| | | | | US | 2017263928 | A1 | 14-09-2017 |
| | | | | US | 2017263929 | A1 | 14-09-2017 |
| | | | | US | 2018062156 | A1 | 01-03-2018 |
| | | | | US | 2019074514 | A1 | 07-03-2019 |
| | | | | WO | 2017160851 | A1 | 21-09-2017 |
| | | | | WO | 2017160852 | A1 | 21-09-2017 |
| | | | | WO | 2017160856 | A1 | 21-09-2017 |
| WO | 2022119156 | A1 | 09-06-2022 | CN | 116250101 | A | 09-06-2023 |
| | | | | CN | 116325225 | A | 23-06-2023 |
| | | | | EP | 4216311 | A1 | 26-07-2023 |
| | | | | EP | 4216312 | A1 | 26-07-2023 |
| | | | | EP | 4231389 | A1 | 23-08-2023 |
| | | | | JP | 2023544060 | A | 19-10-2023 |
| | | | | JP | 2023544339 | A | 23-10-2023 |
| | | | | JP | 2023551720 | A | 12-12-2023 |
| | | | | US | 2023231128 | A1 | 20-07-2023 |
| | | | | US | 2023261179 | A1 | 17-08-2023 |
| | | | | US | 2023268497 | A1 | 24-08-2023 |
| | | | | WO | 2022119156 | A1 | 09-06-2022 |
| | | | | WO | 2022119157 | A1 | 09-06-2022 |
| | | | | WO | 2022119158 | A1 | 09-06-2022 |

EPO FORM P0459

For more details about this annex : see Official Journal of the European Patent Office, No. 12/82